# EUROPÄISCHE PATENTANMELDUNG

(11) **EP 4 756 247 A1**
(43) Veröffentlichungstag der Anmeldung: **10.06.2026**
(21) Anmeldenummer: 25218777.8
(22) Anmeldetag: 26.11.2025
(51) Int. Cl.: F16D 65/10, B60T 1/06

(54) **BREMSSYSTEM UND VERFAHREN ZUR HERSTELLUNG EINER TROMMELBREMSE**

(30) Priorität: 26.11.2024 DE 102024134845
(71) Anmelder: SAF-HOLLAND GmbH, 63856 Bessenbach (DE)
(72) Erfinder: Weber, Elmar, 48249 Dülmen (DE); Arpaci, Muhammet, 48249 Dülmen (DE)
(74) Vertreter: Müller Schupfner & Partner Patent- und Rechtsanwaltspartnerschaft mbB (Muc)

(57) **Zusammenfassung**

Die vorliegende Erfindung betrifft ein Bremssystem, eine Trommelbremseneinheit und ein Verfahren zur Wartung einer Trommelbremseneinheit, das Bremssystem eine Bremstrommel und zumindest zwei Verschleißelemente umfasst, wobei die Verschleißelemente dafür ausgelegt sind, mit einem elementseitigen Verbindungabschnitt an einem trommelseitigen Verbindungsabschnitt der Bremstrommel zur Anlage zu gelangen, wobei der elementseitige Verbindungsabschnitt und der trommelseitiger Verbindungsabschnitt derart zumindest formschlüssig ineinandergreifen, dass der Eingriff eine Verlagerung des Verschleißelements relativ zur Bremstrommel radial zu einer Rotationsachse der Bremstrommel verhindert.

## Beschreibung

Die vorliegende Erfindung betrifft ein Bremssystem und ein Verfahren zur Herstellung eines Bremssystems.

Aus dem Stand der Technik sind allgemein verschiedene Bremssysteme bekannt, darunter auch diverse Trommelbremssysteme, die vorzugsweise aufgrund ihrer Robustheit und Langlebigkeit in Nutzfahrzeugen eingesetzt werden. Nachteilig hingegen ist, dass gängig eingesetzte Trommelbremssysteme ein hohes Eigengewicht mitbringen, wodurch insbesondere die so genannte ungefederte Masse einer Radaufhängung sehr hoch ist und Beschleunigungsprozesse des Fahrzeugs erschwert werden. Durch das höhere Trägheitsmoment der rotierenden Masse der Bremstrommel ist es erforderlich, mehr Energie für insbesondere den Anfahrbetrieb, in dem das Nutzfahrzeug beschleunigt, aufzubringen, was den Fahrzeugbetrieb ressourcen- und kostenintensiver gestaltet als bei einer vergleichsweise leichteren Scheibenbremse. Ein weiterer Schwachpunkt von Trommelbremssystemen ist der aufwendige Bremsbelagswechsel, bei dem in der Regel die Demontage des gesamten Fahrzeugrads erforderlich ist, um die Bremsbeläge, die als Verschleißelemente bei der klassischen Trommelbremse auf Bremsbacken festgelegt sind, zu erreichen und auszuwechseln.

Aufgabe der vorliegenden Erfindung ist es daher, ein leichteres und damit energieeffizienteres Trommelbremsensystem zur Verfügung zu stellen, bei dem ein einfacher und kostengünstiger Bremsbelagswechsel möglich ist.

Diese Aufgabe wird gelöst mit einem Bremssystem gemäß Anspruch 1, einer Trommelbremseneinheit gemäß Anspruch 10 und einem Verfahren zur Wartung einer Trommelbremseneinheit gemäß Anspruch 14 sowie der Verwendung eines Verschleißelements gemäß Anspruch 15.

Erfindungsgemäß ist ein Bremssystem umfassend eine Bremstrommel und zumindest zwei Verschleißelemente, wobei die Verschleißelemente dafür ausgelegt sind, mit einem elementseitigen Verbindungabschnitt an einem trommelseitigen Verbindungsabschnitt der Bremstrommel zur Anlage zu gelangen, wobei der elementseitige Verbindungsabschnitt und der trommelseitiger Verbindungsabschnitt derart zumindest formschlüssig ineinandergreifen, dass der Eingriff eine Verlagerung des Verschleißelements relativ zur Bremstrommel radial zu einer Rotationsachse der Bremstrommel verhindert. Im Gegensatz zu konventionellen Trommelbremsen, bei denen sich die Verschleißelemente üblicherweise auf den Bremsbacken befinden, liegt in der vorliegenden Erfindung ein Bremssystem mit einer Bremstrommel vor, auf deren Innenseite die Verschleißelemente festgelegt sind. Durch diese Verlagerung der Festlegung der Verschleißelemente von der Bremsbacke auf die Bremstrommel, verlagert sich auch die Bremsfläche, also die Berührungsfläche des Verschleißelements mit seinem im Bremsvorgang interagierenden Gegenpart. Der Gegenpart, also der Reibpartner, der Verschleißelemente ist in einer konventionellen Bremssystemausführung die zylindrische Innenfläche der Bremstrommel. Im Rahmen der vorliegenden Erfindung ist hingegen vorgesehen, die zylindrisch geformte und sich bogenförmig erstreckende Außenfläche der Bremsbacke als Reibpartner der Verschleißelemente einzusetzen. Um trotz dieser Verlagerung der Bremsfläche die gleiche Bremswirkung zu erzielen, ist im Rahmen der vorliegenden Erfindung vorgesehen, dass die tatsächliche Berührungsfläche zwischen Verschleißelement und Bremsbacke die gleiche Größe, also insbesondere den gleichen oder einen annähernd gleichen Radius wie die Berührungsfläche zwischen Verschleißelement und Bremstrommel in konventionellen Trommelbremssystemen aufweist. Dies wird damit erzielt, dass die gängig eingesetzten Bremstrommeln stärker ausgedreht werden, sodass sich ihr Innenradius vergrößert und folglich die in der vorliegenden Erfindung theoretische Verlagerung der Bremsfläche nach innen ausgeglichen wird. Da der Außendurchmesser der Bremstrommel weiterhin den üblichen Standards von Nutzfahrzeugen entsprechen muss, hat das Ausdrehen der Bremstrommel eine Verringerung der Bremstrommelwandstärke und damit auch eine Verringerung deren Eigengewichts zur Folge. Durch die dünnwandigere Bremstrommel wird daher letztendlich der gewünschte Effekt erzielt, dass sich bei Beschleunigung des Fahrzeugs das Trägheitsmoment des Fahrzeugrads verringert und damit der Anfahrprozess des Fahrzeugs energieeffizienter erfolgen kann. Diese Verringerung der Wandstärke der Bremstrommel ist im Rahmen der vorliegenden Erfindung insbesondere deshalb möglich, weil die thermische Belastung der Bremstrommel geringer ist, da der Grundkörper der Bremstrommel nicht mehr unmittelbarer Reibpartner bei Bremsvorgängen ist, sondern die an der Bremstrommel festgelegten Verschleißelemente. Der Grundkörper der Bremstrommel ist im Rahmen der vorliegenden Erfindung aus einem Gussmaterial hergestellt. Eine radiale Verschiebung der Verschleißelemente zur Rotationsachse der Bremstrommel wird dabei durch eine formschlüssige Verbindung der Verschleißelemente miteinander und/oder mit der Innenseite der Bremstrommel erreicht. Besonders bevorzugt sorgt der Formschluss zwischen dem elementseitigem Verbindungsabschnitt und dem trommelseitigem Verbindungsabschnitt für eine radiale und gleichzeitig eine tangentiale Sicherung des Verschleißelements relative zur Trommel. Hierdurch kann eine Vereinfachung des Innenaufbaus der Bremstrommel erreicht werden, da ein und dasselbe Element oder ein und derselbe an der Innenseite der Bremstrommel ausgebildete Abschnitt sowohl die tangentiale Verlagerungssicherung der Verschleißelemente relativ zur Bremstrommel, als auch eine radiale Verlagerungssicherung der Verschleißelemente relativ zur Bremstrommel übernehmen kann. Als tangentiale Richtung wird mit Vorteil die Umfangsrichtung entlang einer Kreisbahn um die Rotationsachse der Bremstrommel bezeichnet. Mit Vorteil ist der Formschluss zwischen dem elementseitigem Verbindungsabschnitt und dem trommelseitigem Verbindungsabschnitt derart ausgebildet, dass eine Verlagerung der Verschleißelemente parallel zur Rotationsachse der Bremstrommel, also in axialer Richtung möglich bleibt. Um die Verschleißelemente auch in dieser axialen Richtung relativ zur Bremstrommel zu sichern, ist mit Vorteil ein weiterer Halte- oder Sicherungsabschnitt oder ein Sicherungselement vorgesehen.

In einer Ausführungsform ist der formschlüssige Eingriff zwischen dem jeweiligen Verschleißelement und der Bremstrommel derart trennbar, dass der Verbund aus dem Verschleißelement und der Bremstrommel demontierbar ist. Für anstehende Bremsbelagswechsel ist es notwendig, dass die Verschleißelemente lösbar an der Bremstrommelinnenseite festgelegt sind und schnell und ohne großen Kraftaufwand, vorzugsweise händisch und ohne die Notwendigkeit eines Werkzeugs, von der Bremstrommelinnenseite getrennt werden können. Dies wird insbesondere dadurch erreicht, dass die Verschleißelemente in der Bremstrommel lediglich formschlüssig radial und tangential gesichert sind, aber axial zur Rotationsachse aus der Bremstrommel herausziehbar gelagert sind.

In einer Ausführungsform weist die Bremstrommel einen offenen Stirnabschnitt und einen Randabschnitt auf, wobei sich der Stirnabschnitt parallel zu einer Stirnebene und orthogonal zur Rotationsachse erstreckt, wobei der Randabschnitt rotationssymmetrisch um die Rotationsachse ausgeführt ist. An der Innenseite des Randabschnitts werden die Verschleißelemente so aufgenommen, dass sie beim Bremsbelagswechsel über den offenen Stirnabschnitt ausgetauscht werden können. Über den offenen Stirnabschnitt sind die Verschleißelemente, die parallel zum Randabschnitt rotationssymmetrisch um die Rotationsachse verteilt gelagert sind, beim Bremsbelagswechsel flexibel zu erreichen ohne, dass zwangsläufig die Bremstrommel gemeinsam mit dem Fahrzeugrad demontiert werden muss. Dem offenen Stirnabschnitt gegenüberliegend weist die Bremstrommel eine geschlossene Stirnfläche auf, an welcher eine Nabe und/oder eine Felge eines Fahrzeugrades festgelegt werden kann.

In einer Ausführungsform weist die Bremstrommel einen Innendurchmesser zwischen 350 mm und 550 mm, bevorzugt zwischen 400mm und 500mm, und einen Außendurchmesser zwischen 450 mm und 650mm, bevorzugt zwischen 500mm und 600mm, auf, wobei das Verhältnis zwischen dem Innendurchmesser und dem Außendurchmesser zwischen 0,6 und 0,9 liegt, bevorzugt zwischen 0,7 und 0,85 und insbesondere bevorzugt zwischen 0,75 und 0,8. Das Verhältnis des Innen- und des Außendurchmessers definiert die Wandstärke der Bremstrommel, woraus sich letztendlich ihr Eigengewicht ableitet, dessen Reduktion eines der Ziele der vorliegenden Erfindung ist. Je größer das Verhältnis ist, desto dünnwandiger ist die Bremstrommel und desto geringer ist damit die rotierende und ungefederte Masse des Fahrzeugs. Konventionelle Trommelbremsen, deren Innendurchmesser ungefähr 20mm geringer ist als in einer besonders bevorzugten Ausführungsform der vorliegenden Erfindung, weisen bei gleichem Außendurchmesser ein tendenziell geringeres Innen-Außendurchmesser-Verhältnis auf, das ungefähr 5% bis 10% unter dem Wert der vorliegenden Erfindung liegt. Das Verhältnis zwischen 0,6 und 0,9 umfasst die gängige Bandbreite der Bremstrommeln, worunter sowohl stark dünnwandige Bremstrommel als auch dickwandigere Trommeln fallen, die unter Umständen auch in konventionellen Bremssystemen eingesetzt werden. Der bevorzugte Bereich zwischen 0,7 und 0,85 beschränkt sich auf dünnwandige Bremstrommeln, die insbesondere den Vorzug bieten, deutlich leichter zu sein als herkömmliche Trommelmodelle. Stark dünnwandige Bremstrommeln, deren Wandung lediglich nur noch ein Zehntel des Außendurchmessers beträgt und damit einen Extremfall darstellen, sind von diesem Bereich ausgenommen. Der besonders bevorzugte Bereich zwischen 0,75 und 0,8 beschreibt die besonders bevorzugte Ausführungsform einer Nutzfahrzeugbremse, deren Innendurchmesser ca. 420mm beträgt und innerhalb der vorliegenden Erfindung als Normalwert interpretiert wird.

In einer Ausführungsform umfassen die Verschleißelemente jeweils ein Bremsbelagselement und ein Trägerelement, wobei das Bremsbelagselement und das Trägerelement zumindest teilweise eine bogenförmige Geometrie aufweisen, wobei das Trägerelement und das Bremsbelagselement form-, kraft- und/oder stoffschlüssig miteinander verbunden sind. Die Verschleißelemente setzen sich jeweils aus einem Bremsbelagselement, das aus dem beim Bremsen durch Reibung verschleißenden Material besteht, und einem Trägerelement zusammen. Letzteres besteht bevorzugt aus einem abriebfesten Material, bevorzugt Metall, und ist damit besonders geeignet, als Trägerelement des Verschleißmaterials zu dienen. Das Verschleißelement ist im Rahmen der vorliegenden Erfindung an der konkav gekrümmten Seite des Trägerelements angeordnet und festgelegt. Über das Trägerelement kann das Bremsbelagselement mit seiner teilweisen bogenförmigen Geometrie, die auf das Teilstück des Bremstrommelumfangs, das ein Verschleißelement jeweils in Abhängigkeit der Gesamtanzahl der eigesetzten Verschleißelemente abdecken muss, abgestimmt ist, in die Bremstrommel eingesetzt und im abgenutzten Zustand ausgetauscht werden. Gleichzeitig fungiert das Trägerelement mit seiner Abriebfestigkeit als Schutz für die Bremstrommel, falls das Bremsbelagselement übermäßig abgenutzt wird und nicht rechtzeitig ausgewechselt wird. In diesem Fall wird verhindert, dass beim Bremsen die Bremsbacke als interagierender Reibpartner direkt auf die Bremstrommel trifft und diese beschädigt. Auf diese Weise wird die Lebensdauer einer Bremstrommel im Vergleich zu herkömmlichen Bremstrommeln erheblich gesteigert. Die Verbindung des Trägerelements mit dem Bremsbelagselement kann form-, kraft und/oder stoffschlüssig sein, was vom Verschleißmaterial, aus dem das Bremsbelagselement besteht, und dem Material des Trägerelements abhängt. Ziel ist es, eine radial, tangential und axial gesicherte Verbindung der zwei unterschiedlichen Materialien zu schaffen.

In einer Ausführungsform ist an der Innenseite der Bremstrommel mindestens ein Halteelement ausgebildet oder festgelegt, wobei das zumindest eine Halteelement zwei Verschleißelemente voneinander beabstandet und gegen radiale und/oder tangentiale Verlagerung in der Innenseite der Bremstrommel sichert. Die Anzahl der eingesetzten Halteelemente richtet sich nach der Anzahl der vorhandenen Verschleißelemente, wobei durch die wechselnde Anordnung der Halte- und Verschleißelemente im Randabschnitt der Bremstrommel die Anzahl von Halteelementen und Verschleißelementen stets übereinstimmt. Die radiale und tangentiale Fixierung der Verschleißelemente über benachbarte Halteelemente ist eine effektive Methode, die Verschleißelemente in der Bremstrommel gesichert zu lagern ohne, dass ein formschlüssiger Eingriff der Verschleißelemente mit der Bremstrommel erforderlich ist. Dadurch wird sowohl die Fertigung der Bremstrommel, in die keine Eingriffsgeometrie zur Fixierung der Verschleißelemente integriert werden muss, erleichtert als auch der Wechsel der Bremsbeläge, die nicht mehr gezielt in die Eingriffsgeometrie der Bremstrommel eingeführt werden müssen. Dabei übertragen die Haltelemente auch die in Umfangsrichtung wirkende Bremskraft als Drehmoment von den Verschleißelementen auf die Bremstrommel und damit auch an das unmittelbar oder mittelbar an der Bremstrommel festgelegte Fahrzeugrad.

In einer Ausführungsform sind die Verschleißelemente und die Halteelemente im Innenraum des Randabschnitts der Bremstrommel derart angeordnet, dass sie eine parallel zur Rotationsachse ausgerichtete Eingriffsgeometrie miteinander aufweisen, wobei jeweils die Verschleißelemente und die Halteelemente über den Innenumfang der Bremstrommel verteilt und voneinander beabstandet sind. Um eine gleichmäßige Bremswirkung zu erzielen, sind die Halteelemente analog zu den Verschleißelementen gleichmäßig im Randabschnitt verteilt angeordnet. Um möglichst wenig Bremsfläche mit der Lagerung der Verschleißelemente zu verlieren und die Eingriffsfläche mit den Verschleißelementen zu maximieren, weisen die Halteelemente eine schmale, längliche Geometrie auf, die sich analog zu den Verschleißelemente parallel zur Rotationsachse erstreckt, das heißt vorzugsweise mit einem Querschnitt, welcher sich, abgesehen von beispielsweise Bohrungen für den Eingriff von Bolzen oder Schrauben, entlang einer Parallelen zur Rotationsachse nicht oder nur unwesentlich ändert.

In einer Ausführungsform bilden zwei Halteelemente eine Hinterschneidung zur formschlüssigen Festlegung eines der Verschleißelemente, wobei das Verschleißelement bevorzugt parallel zur Rotationsachse aus der Hinterschneidung entnehmbar ist. Die radiale und tangentiale Sicherung der Verschleißelemente erfolgt über die Eingriffsgeometrie zwischen den Halte- und den Verschleißelementen in Form einer Hinterschneidung, wodurch eine besonders starke, formschlüssige Verbindung der benachbarten Elemente entsteht, die auch bei abrupten Bremsvorgängen einer Verlagerung der Verschleißelementen entgegenwirkt und standhält.

In einer Ausführungsform weisen die Halteelemente jeweils einen bremstrommelseitigen Kontaktabschnitt auf, der form-, kraft- und/oder stoffschlüssig an der Bremstrommel festgelegt ist, sodass die Haltelemente gegen eine radiale und eine tangentiale Verlagerung bezogen auf die Rotationsachse und vorzugsweise auch gegen eine axiale Verschiebung entlang der Rotationsachse gesichert sind. Zur Gewährleistung einer sicheren Lagerung der Verschleißelemente sind die Halteelemente sowohl radial, tangential als auch axial zur Rotationsachse in der Bremstrommel fixiert. Die Fixierung erfolgt über einen bremstrommelseitigen Kontaktabschnitt, über den die Halteelemente mit der Bremstrommel eine kraft- und/oder form- und/oder stoffschlüssige Verbindung eingehen.

Erfindungsgemäß ist eine Trommelbremseneinheit für den Einsatz in einem Nutzfahrzeug vorgesehen, umfassend ein Bremssystem und eine Abdeckeinheit, wobei sich die Abdeckeinheit überwiegend parallel zur Stirnfläche erstreckt, wobei die Abdeckeinheit als kreisförmiger, zumindest zweiteiliger Blechkörper ausgelegt ist, welcher den offenen Stirnabschnitt der Bremstrommel abdeckt, wobei die Abdeckeinheit mindestens ein Klappenelement und mindestens ein Dichtelement aufweist, wobei die Abdeckeinheit eine zentrale Aufnahmeposition aufweist, durch welche orthogonal die Rotationsachse verläuft, wobei die Abdeckeinheit statisch zur rotierenden Bremstrommel festgelegt ist. Die Trommelbremseneinheit setzt sich bevorzugt zusammen aus einer dünnwandigen, mit Verschleißelementen lagernden Bremstrommel eines zuvor beschriebenen Bremssystems und einer kreisförmigen Abdeckeinheit, welche den offenen Stirnabschnitt der Bremstrommel abdeckt. Die Abdeckeinheit ist vorzugsweise aus einem leicht formbaren Blechkörper hergestellt, der in seiner Funktion als Abdeckung mindestens 2-teilig ausgeführt ist, wobei der größere, abdeckende Teil als gegebenenfalls mehrteiliges Dichtelement ausgeführt ist, das verhindert, dass bei Nutzung des Fahrzeugs gröbere Staub- und Schmutzpartikel in das Bremssystem gelangen. Der kleinere Teil der Abdeckeinheit ist als Klappenelement ausgeführt, welches lösbar am Dichtelement festgelegt ist und eine Öffnung im Dichtelement abdeckt, über welche der Bremsbelagswechsel durchgeführt werden kann. Als Einheit erstrecken sich sowohl das /die Dichtelement/e und das Klappenelement damit im Wesentlichen parallel zur Stirnebene und werden über eine zentrale Aufnahmeposition auf einer starren Achse oder einem Achsstummel statisch und orthogonal zur Rotationsachse gelagert.

In einer Ausführungsform sind das Klappenelement und das zumindest eine Dichtelement im Wesentlichen jeweils als einstückige Blechkörper ausgeführt, wobei das Klappenelement und das zumindest eine Dichtelement jeweils zumindest zum Teil eine kreisbogenförmige Seite aufweisen und an den Stirnabschnitt der Bremstrommel grenzen, wobei das Klappenelement an das zumindest eine Dichtelement grenzt und in einer Klappenöffnung des Dichtelements formschlüssig festgelegt ist. Aufgrund der guten Verformbarkeit sind sowohl das Klappenelement und das zumindest eine Dichtelement bevorzugt aus einem einstückigen Blechkörper geformt, sodass sie optimal an die Größe und Form des offenen Stirnabschnitts angepasst und insbesondere auch aneinander angepasst werden können, um eine möglichst dichte Abdeckeinheit zur Verfügung zu stellen. Die Anpassung an die offene Stirnfläche erfolgt über eine zum Teil kreisbogenförmige Seite sowohl des Klappenelements als auch des zumindest einen Dichtelements, die jeweils mit der Form der offenen Stirnfläche korrespondiert. Die Grenze zwischen dem Klappenelement und dem zumindest einen Dichtelement, die ebenfalls formschlüssig zueinander in Verbindung stehen, bildet beim Bremsbelagswechsel, wenn das Klappenelement entfernt ist, eine Klappenöffnung, über die der Austausch der Verschleißelemente erfolgen kann.

In einer Ausführungsform umfasst die Trommelbremseneinheit mindestens eine Bremsbacke, welche in einem ersten Zustand keinen Kontakt zum Bremsbelagselement hat und welche durch die Betätigung der Bremse in einen zweiten Zustand versetzt wird, in dem sie im Kontakt zum Bremsbelagselement steht, wobei die Bremsbacke im Wesentlichen als einstückiges Bauteil ausgebildet ist, vorzugsweise als Gussteil. Die zumindest eine Bremsbacke agiert beim Bremsvorgang als Gegenpart zu den an der Bremstrommel gelagerten Verschleißelementen. In einem ersten Zustand, in dem das Fahrzeug ungebremst ist, findet keine Interaktion der Verschleißelemente und der Bremsbacke statt. In einem zweiten Zustand, der durch das Betätigen der Bremse ausgelöst wird, treten die Verschleißelemente und die zumindest eine Bremsbacke miteinander in Kontakt und bilden eine Berührungsfläche, die der effektiven Bremsfläche entspricht. Da die Bremsbacke in diesem zweiten Zustand starken Reibungskräfte und einer damit einhergehenden intensiven Wärmeentwicklung ausgesetzt ist, ist sie bevorzugt aus einem einstückigen Gussteil gefertigt, das sowohl eine sehr hohe Festigkeit und Stabilität aufweist als auch eine hohe Wärmekapazität, sodass die Reibungswärme bevorzugt von der zumindest einen Bremsbacke aufgenommen werden kann. In einer besonders bevorzugten Ausführungsform werden Trommelbremseneinheiten mit zwei benachbarten Bremsbacken eingesetzt, um eine gleichmäßigere Kraftverteilung beim Bremsen auf die Bremsbacken und die Bremstrommel zu gewährleisten. Ein weiterer Vorteil dieser 2-teiligen Bremsbackenausführung ist die einfachere Händelbarkeit der zumeist schweren Gussteile.

In einer Ausführungsform weist die Abdeckeinheit einen Kühlabschnitt auf, wobei zumindest ein Kühlabschnitt als kiemenförmige, ausklappbare Öffnung in Fahrtrichtung ausgeführt ist, und/oder wobei zumindest ein Kühlabschnitt als Luftleitblech entgegen der Fahrtrichtung ausgeführt ist, und/oder wobei zumindest ein Kühlabschnitt als ein Unterdruck erzeugender Spoiler ausgeführt ist, und/oder wobei zumindest ein Kühlabschnitt als ein NACA Duct-Lufteinlass ausgeführt ist. Während die Bremstrommel bei der Wärmeentwicklung im Bremsvorgang durch die Bremsbelagselemente, deren Material im Vergleich zu Metall eine geringe Wärmeleitfähigkeit aufweist, tendenziell isoliert ist, nehmen die Bremsbacken, die in Kontakt mit den Verschleißelementen die Bremsfläche bilden, einen Großteil der entstehenden Reibungswärme auf. Aufgrund ihrer hohen Masse und Wärmekapazität sind die Bremsbacken im Stande, eine größere Wärmemenge aufzunehmen ohne, dass das Risiko einer thermischen Verformung der Bremsbacken besteht. Dennoch muss die aufgenommene Wärmemenge insbesondere bei längeren Bremsvorgängen im Fahrbetrieb abgeführt werden, wofür verschiedene Methoden infrage kommen. Eine vergleichsweise technisch einfach umsetzbare, mechanische Lösung zum Abführen der gespeicherten Wärme ist das Integrieren eines oder mehrerer Kühlabschnitts/e in das/die Dichtelement/e der Abdeckeinheit. Diese Kühlabschnitte können zum einen in Form von kiemenförmigen, bei Hitzeentwicklung automatisch ausklappbaren Öffnungen in Fahrtrichtung realisiert werden, durch die der einströmende Fahrtwind zu den sich erwärmenden Bremsbacken geleitet und nach erfolgtem Wärmeaustauch wieder abgeleitet wird. Eine weitere Realisierungsmöglichkeit ist die Ausführung der Kühlabschnitte in Form von Leitblechen, die den Fahrtwind sowohl in als auch gegen die Fahrtrichtung zu und anschließend wieder von den Bremsbacken weg leiten. Technisch komplexere, aber dafür auch effizientere Methoden zur Wärmeabführung sind zum einen die Integration eines Unterdrucks erzeugenden Spoilers und zum anderen der Einbau eines NACA Duct-Einlasses. Ersteres bewirkt, dass durch den erzeugten Unterdruck Luft bzw. Fahrwind in die Trommelbremseneinheit gezogen wird, über die die Bremsbacken abgekühlt werden. Im letzteren genannten Fall kann der Fahrtwind über eine NACA-Öffnung, die einen besonders strömungsgünstigen Lufteinlass darstellt, bei dem über die schrägen Kanten des Einlasses Luftwirbel erzeugt werden, in die Bremstrommel zu den Bremsbacken einströmen.

Erfindungsgemäß ist ein Verfahren zur Wartung einer Trommelbremseneinheit umfassend die Schritte: a) Bereitstellung einer Trommelbremseneinheit; b) Lösen der Festlegung des Klappenelements; c) Öffnen einer unter dem Klappenelement liegenden Klappenöffnung in dem Dichtelement der Abdeckeinheit; d) Lösen der axialen Festlegung des Verschleißelements und Entnahme eines Verschleißelements durch die Klappenöffnung; e) Einsetzen eines neuen Verschleißelements und Wiederherstellen der axialen Sicherung und f) Schließen der Klappenöffnung mit dem Klappenelement. Die effektive Wartung der Trommelbremseneinheit, die insbesondere den Wechsel der Bremsbeläge umfasst, stellt mit einen der entscheidendsten Vorteile der vorliegenden Erfindung dar, da es im Gegensatz zu konventionellen Trommelbremssystemen nicht mehr erforderlich ist, die Bremstrommel und das Fahrzeugrad zu demontieren. Stattdessen kann die gesamte Wartung über die Klappenöffnung in der Abdeckeinheit erfolgen, indem in einem ersten Wartungsschritt das Klappenelement entfernt wird, um in die Reichweite der Verschleißelemente zu gelangen. Durch die partielle Entfernung der Abdeckeinheit sind diejenigen Verschleißelemente, die sich jeweils direkt unter der freien Klappenöffnung befinden, nicht mehr axial gesichert und können parallel zur Rotationsachse ohne großen Kraftaufwand aus der Bremstrommel gezogen werden. Analog kann ein neues Verschleißelement in die Bremstrommel eingeführt werden. Nach erfolgtem Wechsel wird die Klappenöffnung wieder durch das Klappenelement geschlossen, sodass sowohl der offenen Stirnabschnitt der Bremstrommel wieder vollständig abgedeckt und die axiale Sicherung der Verschleißelemente wiederhergestellt ist.

In einer Ausführungsform ist durch Drehen der Bremstrommel relativ zur Abdeckeinheit das Klappenelement jeweils so positionierbar, dass jeweils eines einer Vielzahl von Verschleißelementen ausgewechselt werden kann. Das Wartungsverfahren zum Wechsel der Bremsbeläge ist durch die Rotation der Bremstrommel auf alle sich in dem Randabschnitt befindenden Verschleißelemente anwendbar. Dazu wird nach dem ersten erfolgten Wechsel eines Verschleißelements die Bremstrommel so weit gedreht, bis sich das benachbarte verschlissene Verschleißelement unterhalb der freien Klappenöffnung befindet und, nachdem eine bevorzugt vorhandene axiale Sicherung aufgelöst wurde, entnommen werden kann. Durch Wiederholen des Vorgangs bis alle Verschleißelemente ausgetauscht wurden, kann ein vollständiger Bremsbelagswechsel erfolgen, der durch das Verschließen der Klappenöffnung mit dem Klappenelement abgeschlossen wird.

Erfindungsgemäß ist eine Verwendung eines Verschleißelements in einer Bremsanlage eines Kraftfahrzeugs, insbesondere eines Nutzfahrzeugs, vorgesehen. Die vorliegende Erfindung eignet sich insbesondere für schwerere Nutzfahrzeuge, bei denen robustere Trommelbremssysteme, eingesetzt werden, wobei die geringere ungefederte Masse der Trommelbremse eine verbesserte Wirtschaftlichkeit und eine höhere Lebensdauer der Radaufhängung erreicht. Die austauschbaren Verschleißelemente der vorliegenden Erfindung ermöglichen parallel ein optimiertes Wartungsverfahren zum Bremsbelagswechsel, das in konventionellen Trommelbremsen für Nutzfahrzeuge bisher gefehlt hat.

Weitere Vorteile und charakteristische Merkmale der vorliegenden Erfindung ergeben sich aus der nachfolgenden Beschreibung mit Bezug auf die beigefügten Figuren. Gleiche Merkmale werden in den Figuren jeweils mit gleichen Bezugszeichen verwendet, auch wenn sie Teil unterschiedlicher Ausführungsform sind. Es versteht sich dabei, dass einzelne Merkmale, welche nur für eine bestimmte Ausführungsform explizit beschrieben werden, auch in anderen Ausführungsform der Erfindung zum Einsatz gelangen können sollen, sofern sich diese nicht aufgrund technischer Gegebenheiten verbietet.

Es zeigen:
- Fig. 1: eine perspektivische Ansicht einer Ausführungsform eines Bremssystems mit vollständig eingesetzten Verschleißelementen;
- Fig. 2: eine perspektivische Ansicht einer Ausführungsform eines Bremssystems mit einem herausgezogenen Verschleißelement;
- Fig. 3: eine Frontalansicht einer Ausführungsform einer Trommelbremseneinheit ohne Abdeckeinheit;
- Fig. 4: eine Frontalansicht einer Ausführungsform einer Trommelbremseneinheit ohne Klappenelement;
- Fig. 5: eine Frontalansicht einer Ausführungsform einer Abdeckeinheit;
- Fig. 6: eine Frontalansicht einer Ausführungsform einer Abdeckeinheit mit entferntem Klappenelement;
- Fig. 7: eine Seitenansicht einer Ausführungsform eines NACA Duct-Lufteinlasses;
- Fig. 8: eine Draufsicht einer Ausführungsform eines NACA Duct-Lufteinlasses;
- Fig. 9: eine perspektivische Ansicht einer Ausführungsform einer Trommelbremseneinheit mit entfernten Klappenelement; und
- Fig. 10: eine perspektivische Ansicht einer Ausführungsform einer Trommelbremseneinheit mit entfernten Klappenelement und herausgezogenen Verschleißelement.

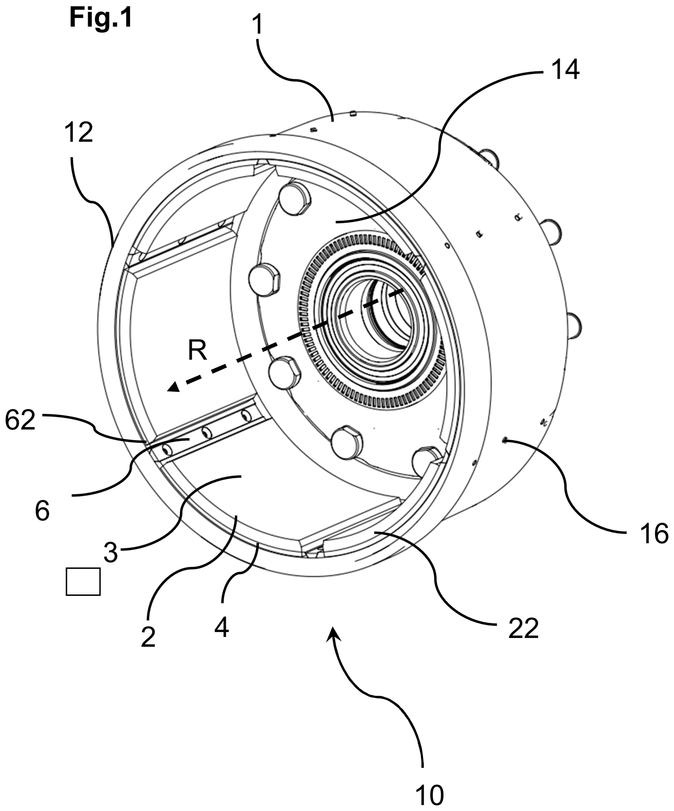

In **Figur 1** ist eine Ausführungsform eines Bremssystems 10 in perspektivischer Ansicht dargestellt. Das Bremssystem umfasst eine Bremstrommel 1 mit einem offenen Stirnabschnitt 14 und einem an diesen angrenzenden Randabschnitt 16, der rotationsymmetrisch zur Rotationsachse R ausgeführt ist. An der Innenseite des Randabschnitts 16 sind sechs Verschleißelemente 2 gleichmäßig angeordnet festgelegt, die mittels jeweils zwei benachbarten Halteelementen 6 gegen radiale und tangentiale Verlagerung gesichert sind. Die Halteelemente 6 sind über einen trommelseitigen Kontaktabschnitt 62 form-, kraft- und/oder stoffschlüssig an dem Randabschnitt 16 festgelegt. Jedes Verschleißelement 2 setzt sich zusammen aus einem Bremsbelagselement 3, das beim Bremsen das verschleißende, die Bremswirkung erzielende Material darstellt, und einem Trägerelement 4, das über einen trägerseitigem Verbindungsabschnitt 22 den Kontakt zu der Bremstrommel 1 über einen trommelseitigen Verbindungsabschnitt 12 herstellt.

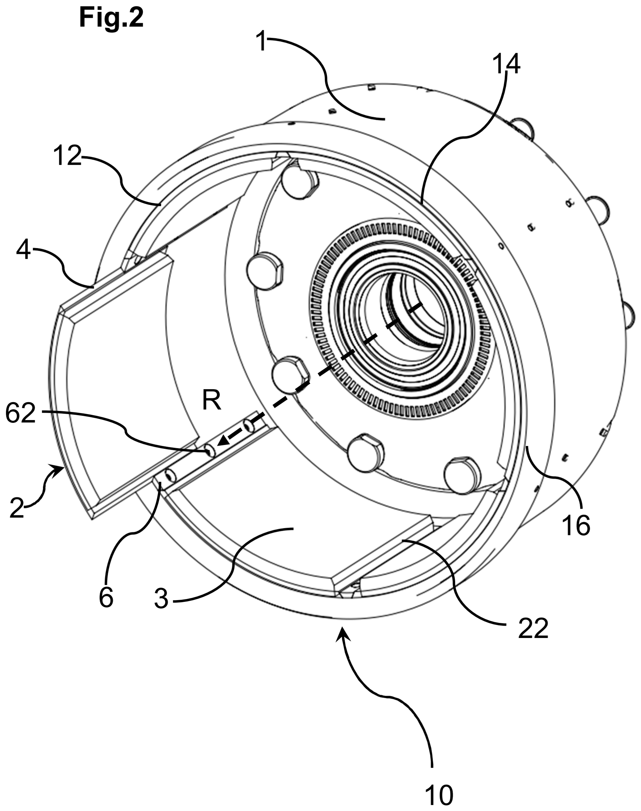

**Figur 2** zeigt analog zu Figur 1 eine Ausführungsform eines Bremssystems 10 in perspektivischer Ansicht, in der eines der sechs Verschleißelemente 2 im Zuge eines Bremsbelagswechsels gemäß des Wartungsschritts d) des zuvor beschriebenen Verfahrens ausgetauscht wird, indem es aus seiner radial und tangential gesicherten Position zwischen den zwei benachbarten Halteelementen 6 herausgezogen wird.

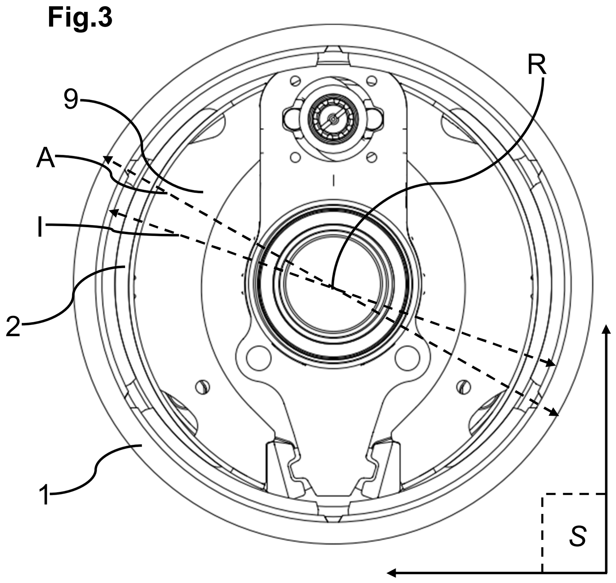

In **Figur 3** ist eine Frontalansicht einer Ausführungsform einer Trommelbremseneinheit 100 ohne Abdeckeinheit 8 mit offenem Stirnabschnitt 14, der sich parallel zur Stirnebene S erstreckt, dargestellt, in der sich die zwei Bremsbacken 9 im ersten Zustand des Fahrbetriebs befinden, in dem sie keinen Kontakt zu den an der Bremstrommel 1 festgelegten Verschleißelementen 2 haben. Über die Rotationsachse R, um welche die Bremstrommel 1 drehbar relativ zu einer starren Achse oder einem Achsstummel angeordnet ist, sind der Innendurchmesser I und der Außendurchmesser A der Bremstrommel 1 definiert, deren Größenverhältnis zueinander als relatives Maß die Wandstärke der Bremstrommel 1 quantifiziert.

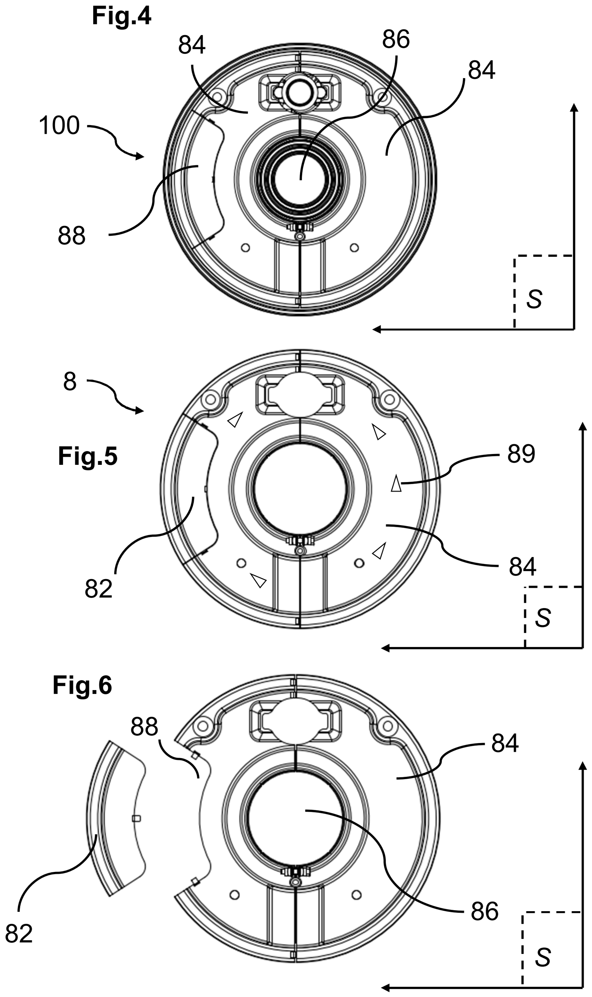

Die **Figuren 4-6** veranschaulichen den Aufbau der Abdeckeinheit 8 anhand einer besonders bevorzugten Ausführungsform der Abdeckeinheit 8 mit zwei Dichtelementen 84 jeweils als Frontalansicht. Neben der zentralen Aufnahmeposition 86 und der Klappenöffnung 88, weist die Abdeckeinheit vorzugsweise noch eine Aussparung auf, in den Figuren 4 - 6 oben und mittig, durch welche hindurch die Bremsbetätigung, vorzugsweise ein S-Nocken, reicht.

In **Figur 4** ist eine Ausführungsform der Abdeckeinheit 8 integriert in eine Trommelbremseneinheit 100 mit geöffneter Klappenöffnung 88 dargestellt, wobei der Stirnabschnitt 14 durch die Dichtelemente 84 abgedeckt ist.

**Figur 5** zeigt eine Ausführungsform einer Abdeckeinheit 8 mit in die Klappenöffnung 88 eingesetztem Klappenelement 82. Auf den Dichtelementen 84 sind eine Vielzahl von Kühlabschnitten 89 schematisch dargestellt, über die bei Wärmeentwicklung im Fahrbetrieb des Fahrzeugs Fahrtwind in die Bremstrommel 1 einströmen kann, um die beim Bremsvorgang von den Bremsbacken 9 aufgenommene Wärmemenge wieder abzuführen.

In **Figur 6****,** in der eine Ausführungsform der Abdeckeinheit 8 analog der Figur 5 dargestellt ist, ist das Klappenelement 82 im demontierten Zustand neben der Abdeckeinheit 8 angeordnet, sodass die Klappenöffnung 88 frei liegt.

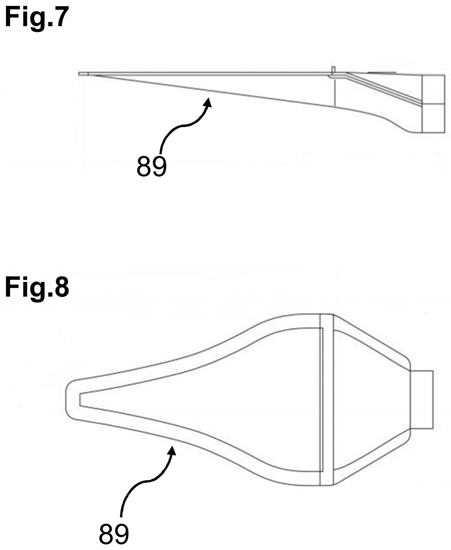

Die **Figuren 7 und 8** stellen eine bevorzugte Ausführungsform eines Kühlabschnitts 89 in Form zweier Detailansichten eines NACA Duct-Lufteinlasses aus verschiedenen Perspektiven dar. **Figur 7** zeigt eine Seitenansicht eines NACA Duct-Einlasses und **Figur** 8 die zugehörige Draufsicht des dargestellten NACA Duct-Einlasses. In beiden Perspektiven sind die schrägen Kanten des Einlasses erkennbar, über die Luftwirbel erzeugt werden, die einen optimierenden Effekt auf die Strömungsbedingungen und damit auf den Wärmeaustauch bewirken.

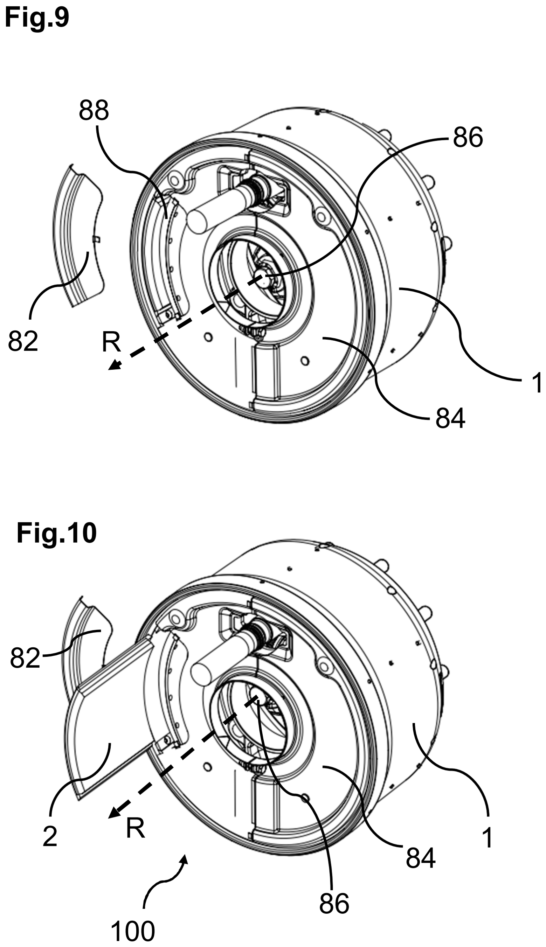

Die **Figuren 9 und 10** veranschaulichen das mehrschrittige Wartungsverfahren der Trommelbremseneinheit, in Zuge dessen ein Wechsel der Verschleißelemente 2 erfolgt.

**Figur 9** zeigt die Verfahrensschritte a) bis c) und d), die zum einen die vorbereitenden Schritte für den Bremsbelagswechsel und zum anderen den abschließenden Verfahrensschritt nach dem Bremsbelagswechsel darstellen. In den Verfahrensschritten a) bis c) wird die Trommelbremseneinheit 100 bereitgestellt, das Klappenelement 82 gelöst und folglich die Klappenöffnung 88 geöffnet. Damit erfolgt auch automatisch das Lösen der axialen Sicherung des sich unter dem Klappenelement 82 befindenden Verschleißelements 2. In dem Verfahrensschritt d) wird die Klappenöffnung 88 nach dem Austausch des Verschleißelements 2 wieder mit dem Klappenelement 82 verschlossen, sodass auch die axiale Sicherung des Verschleißelements 2 wiederhergestellt ist.

**Figur 10** zeigt in dem Verfahrensschritt d) den Austausch des Verschleißelements 2, in dem das verschlissene Verschleißelement 2 aus seiner in der Bremstrommel 1 radial und tangential gesicherten Position durch die geöffnete Klappenöffnung 88 hindurch entfernt und das neue Verschleißelement 2 eingeführt wird.

### Bezugszeichenliste:

- 1: Bremstrommel
- 2: Verschleißelement
- 3: Bremsbelagselement
- 4: Trägerelement
- 6: Halteelement
- 8: Abdeckeinheit
- 9: Bremsbacke
- 10: Bremssystem
- 12: Trommelseitiger Verbindungsabschnitt
- 14: Stirnabschnitt
- 16: Randabschnitt
- 22: Trägerseitiger Verbindungsabschnitt

- 62: Trommelseitiger Kontaktabschnitt
- 82: Klappenelement
- 84: Dichtelement
- 86: Zentrale Aufnahmeposition
- 88: Klappenöffnung
- 89: Kühlabschnitt
- 100: Trommelbremseneinheit

- S: Stirnebene
- R: Rotationsachse
- I: Innendurchmesser
- A: Außendurchmesser

## Patentansprüche

1. Bremssystem (10) umfassend eine Bremstrommel (1) und zumindest zwei Verschleißelemente (2),
wobei die Verschleißelemente (2) dafür ausgelegt sind, mit einem elementseitigen Verbindungabschnitt (22) an einem trommelseitigen Verbindungsabschnitt (12) der Bremstrommel (1) zur Anlage zu gelangen,
wobei der elementseitige Verbindungsabschnitt (22) und der trommelseitiger Verbindungsabschnitt (12) derart zumindest formschlüssig ineinandergreifen, dass der Eingriff eine Verlagerung des Verschleißelements (2) relativ zur Bremstrommel (1) radial zu einer Rotationsachse (R) der Bremstrommel (1) verhindert.

2. Bremssystem (10) nach Anspruch 1,
wobei der formschlüssige Eingriff zwischen dem jeweiligen Verschleißelement (2) und der Bremstrommel (1) derart trennbar ist, dass der Verbund aus dem Verschleißelement (2) und der Bremstrommel (1) demontierbar ist.

3. Bremssystem (10) nach einem der vorhergehenden Ansprüche,
wobei die Bremstrommel (1) einen offenen Stirnabschnitt (14) und einen Randabschnitt (16) aufweist,
wobei sich der Stirnabschnitt (14) parallel zu einer Stirnebene (S) und orthogonal zur Rotationsachse (R) erstreckt,
wobei der Randabschnitt (16) am Stirnabschnitt (14) festgelegt ist und rotationssymmetrisch um die Rotationsachse (R) ausgeführt ist.

4. Bremssystem (10) nach einem der vorhergehenden Ansprüche,
wobei die Bremstrommel (1) einen Innendurchmesser (I) zwischen 350 mm und 550 mm, bevorzugt zwischen 400mm und 500mm, aufweist,
wobei die Bremstrommel (1) einen Außendurchmesser (A) zwischen 450 mm und 650mm, bevorzugt zwischen 500mm und 600mm, aufweist,
wobei das Verhältnis zwischen dem Innendurchmesser (I) und dem Außendurchmesser (A) zwischen 0,6 und 0,9 liegt, bevorzugt zwischen 0,7 und 0,85 und insbesondere bevorzugt zwischen 0,75 und 0,8.

5. Bremssystem (10) nach einem der vorhergehenden Ansprüche,
wobei die Verschleißelemente (2) jeweils ein Bremsbelagselement (3) und ein Trägerelement (4) umfassen,
wobei das Bremsbelagselement (3) und das Trägerelement (4) zumindest teilweise eine bogenförmige Geometrie aufweisen,
wobei das Trägerelement (4) und das Bremsbelagselement (3) form-, kraft- und/oder stoffschlüssig miteinander verbunden sind.

6. Bremssystem (10) nach einem der vorhergehenden,
wobei an der Innenseite der Bremstrommel (1) mindestens ein Halteelement (6) ausgebildet oder festgelegt ist,
wobei das zumindest eine Halteelement (6) zwei Verschleißelemente (2) voneinander beabstandet und gegen radiale und/oder tangentiale Verlagerung in der Innenseite der Bremstrommel (1) sichert.

7. Bremssystem (10) nach einem der vorhergehenden Ansprüche,
wobei die Verschleißelemente (2) und die Halteelemente (6) im Innenraum des Randabschnitts (16) der Bremstrommel (1) derart angeordnet sind, dass sie eine parallel zur Rotationsachse (R) ausgerichtete Eingriffsgeometrie miteinander aufweisen,
wobei jeweils die Verschleißelemente (2) und die Halteelemente (6) über den Innenumfang der Bremstrommel (1) verteilt und voneinander beabstandet sind

8. Bremssystem (10) nach einem der vorhergehenden Ansprüche,
wobei zwei Halteelemente (6) eine Hinterschneidung zur formschlüssigen Festlegung eines der Verschleißelemente (2) bilden,
wobei das Verschleißelement (2) bevorzugt parallel zur Rotationsachse (R) aus der Hinterschneidung entnehmbar ist.

9. Bremssystem (10) nach Anspruch 8,
wobei die Halteelemente (6) jeweils einen bremstrommelseitigen Kontaktabschnitt (62) aufweisen,
wobei der bremstrommelseitige Kontaktabschnitt (62) form-, kraft- und/oder stoffschlüssig an der Bremstrommel (1) festgelegt ist, sodass die Haltelemente (6) gegen eine radiale und eine tangentiale Verlagerung bezogen auf die Rotationsachse (R) und vorzugsweise auch gegen eine axiale Verschiebung entlang der Rotationsachse (R) gesichert sind.

10. Trommelbremseneinheit (100) für den Einsatz in einem Nutzfahrzeug umfassend ein Bremssystem (10) nach einem der vorhergehenden Ansprüche und eine Abdeckeinheit (8),
wobei sich die Abdeckeinheit (8) überwiegend parallel zur Stirnfläche (S) erstreckt,
wobei die Abdeckeinheit (8) als kreisförmiger, zumindest zweiteiliger Blechkörper ausgelegt ist, welcher den offenen Stirnabschnitt (14) der Bremstrommel (1) abdeckt,
wobei die Abdeckeinheit (8) mindestens ein Klappenelement (82) und mindestens ein Dichtelement (84) aufweist,
wobei die Abdeckeinheit (8) eine zentrale Aufnahmeposition (86) aufweist, durch welche orthogonal die Rotationsachse (R) verläuft,
wobei die Abdeckeinheit (8) statisch zur rotierenden Bremstrommel (1) festgelegt ist.

11. Trommelbremseneinheit (100) nach Anspruch 10,
wobei das Klappenelement (82) und das zumindest eine Dichtelement (84) im Wesentlichen jeweils als einstückige Blechkörper ausgeführt sind,
wobei das Klappenelement (82) und das zumindest eine Dichtelement (84) jeweils zumindest zum Teil eine kreisbogenförmige Seite aufweisen und an den Stirnabschnitt (14) der Bremstrommel (1) grenzen,
wobei das Klappenelement (82) an das zumindest eine Dichtelement (84) grenzt und in einer Klappenöffnung (88) des Dichtelements (84) formschlüssig festgelegt ist.

12. Trommelbremseneinheit (100) nach einem der vorhergehenden Ansprüche, wobei die Trommelbremseneinheit (100) mindestens eine Bremsbacke (9) umfasst, welche sich beim Fahren in einem ersten Zustand befindet, in welchem kein Kontakt zum Bremsbelagselement (3) besteht und welche durch die Betätigung der Bremse in einen zweiten Zustand versetzt wird, in dem die zumindest eine Bremsbacke (9) im Kontakt zum Bremsbelagselement (3) steht, wobei die Bremsbacke (9) im Wesentlichen als einstückiges Bauteil ausgebildet ist, vorzugsweise als Gussteil.

13. Trommelbremseneinheit (100) nach einem der vorhergehenden Ansprüche, wobei die Abdeckeinheit (8) einen Kühlabschnitt (89) aufweist,
wobei zumindest ein Kühlabschnitt (89) als kiemenförmige, ausklappbare Öffnung in Fahrtrichtung ausgeführt ist, und/oder
wobei zumindest ein Kühlabschnitt (89) als Luftleitblech entgegen der Fahrtrichtung ausgeführt ist, und/oder
wobei zumindest ein Kühlabschnitt (89) als ein Unterdruck erzeugender Spoiler ausgeführt ist, und/oder
wobei zumindest ein Kühlabschnitt (89) als ein NACA Duct-Lufteinlass ausgeführt ist.

14. Verfahren zur Wartung einer Trommelbremseneinheit (100) umfassend die Schritte:
a) Bereitstellung einer Trommelbremseneinheit (100) gemäß einem der Ansprüche 10 bis 13;
b) Lösen der Festlegung des Klappenelements (82)
c) Öffnen einer unter dem Klappenelement (82) liegenden Klappenöffnung (88) in dem Dichtelement (84) der Abdeckeinheit (8)
d) Lösen der axialen Festlegung des Verschleißelements (2) und Entnahme eines Verschleißelements (2) durch die Klappenöffnung (88)
e) Einsetzen eines neuen Verschleißelements (2) und Wiederherstellen der axialen Sicherung;
f) Schließen der Klappenöffnung (88) mit dem Klappenelement (82)

15. Verwendung eines Verschleißelements (2) gemäß einem der Ansprüche 1 - 9 in einer Bremsanlage eines Kraftfahrzeugs, insbesondere eines Nutzfahrzeugs.
